# EUROPEAN PATENT APPLICATION

(11) **EP 2 384 952 A1**
(43) Date of publication of application: **09.11.2011**
(21) Application number: 09836002.7
(22) Date of filing: 16.11.2009
(51) Int. Cl.: B62B 7/06, B62B 7/08

(54) **BIDIRECTIONAL FOLDABLE TROLLEY**

(30) Priority: 31.12.2008 CN 200820181267 U
(71) Applicant: Goodbaby Child Products Co., Ltd., Jiangsu 215-331 (CN)
(72) Inventor: SONG, Zhenghuan, Kunshan Jiangsu 215331 (CN); MA, Fusheng, Kunshan Jiangsu 215331 (CN)
(74) Representative: Beetz & Partner
(86) International application number: PCT/CN2009/074964
(87) International publication number: WO 2010/075715

(57) **Abstract**

The present invention relates to a foldable stroller, the frame of which comprising a first front supporting frame, a front connector with one lateral end rotatablely connected to the lower end of the first front supporting frame, a second front supporting frame with the lower end rotatablely connected to the other lateral end of the front connector, a first rear wheel bracket with the front end rotatablely connected to the front connector, a second rear wheel bracket with the front end rotatablely connected to the front connector, a first push rod with the lower end thereof rotatablely connected to the upper portion of the first front supporting frame, a second push rod with the lower end thereof rotatablely connected to the upper portion of the second front supporting frame, and a rear supporting frame connected between the push rods and the rear wheel brackets, or, between the front supporting frames and the rear wheel brackets. The stroller of the present invention is provided with a frame of simple structure, fewer components, simplified fabrication process.

## Description

### Field of the Invention

The present invention relates to a baby stroller, particularly to a bi-directionally foldable stroller.

### Description of the Related Art

China patent NO.200820031125.0 disclosed a bi-directionally foldable baby stroller, the frame of which comprises a pair of front supporting frames on either side of the frame, a front connector disposed between the front supporting frames, a rear wheel bracket connecting piece connected to the front connector, a pair of rear wheel brackets rotatablely connected to the rear wheel bracket connecting piece, and a pair of push rods on either side of the frame. It is noted that the numerous components and the complex producing process of the stroller frame greatly increase the production cost.

### Summary Of The invention

The object of the present invention is to provide a bi-directionally foldable stroller of less components with a much-simplified producing process.

In order to obtain one or more of these objects, the present invention provides a bi-directionally foldable stroller, comprising a foldable frame, wheels arranged under the frame, and a locking mechanism for locking the frame into the unfolded position. The frame further comprises a first front supporting frame and a second front supporting frame disposed on either side of the frame, a front connector with the corresponding lateral end thereof rotatablely connected to the lower end of the first front supporting frame or the lower end of the second front supporting frame respectively, a first rear wheel bracket and a second rear wheel bracket with the front ends thereof rotatablely connected to the front connector, a first push rod with the lower end thereof rotatablely connected to the upper portion of the first front supporting frame, a second push rod with the lower end thereof rotatablely connected to the upper portion of the second front supporting frame, and a rear supporting frame connected between the push rods and the rear wheel brackets, or, between the front supporting frames and the rear wheel brackets. The frame is in a stable unfolded position after the rear supporting frame stretches out. When the locking mechanism unlocked, push the push rods to fold over the front supporting frames which rotate with respect to the front connector to fold over the rear wheel brackets, inducing the rear supporting frame folding synchronously with the movement of the front supporting frames and the push rods. It is noted that a much-simplified folding process is provided for users.

In certain embodiments, the first front supporting frame is rotatablely connected to the front connector through a first rotational piece that allows the first front supporting frame to rotate downwards and draw towards the second front supporting frame, and the second front supporting frame is rotatablely connected to the front connector through a second rotational piece that allows the second front supporting frame to rotate downwards and draw towards the first front supporting frame. When the frame folded, the front supporting frames rotate downwards and draw towards each other to fold up, inducing the push rods folding and drawing towards each other to provide a low folded volume.

The rear wheel brackets are rotatablely connected to the front connector either through a sole rotary shaft extending along the longitudinal direction, or through two separate shafts.

Preferably, the rear supporting frame comprises a first rod and a second rod that intersect and rotatablely connect with each other at the intersection joint.

The rear supporting frame comprises two rods that intersect and rotatablely connect with each other at the intersection joint, preferably, connecting between the push rods and the rear wheel brackets. For instance, one end of the first rod is rotatablely connected to the lower end of the first push rod through a first rotational joint, and the other end of the first rod is rotatablely connected to the second rear wheel bracket through a fourth rotational joint. One end of the second rod is rotatablely connected to the lower end of the second push rod through a second rotational joint, and the other end of the second rod is rotatablely connected to the first rear wheel bracket through a third rotational joint. The rear supporting frame of this embodiment is provided with a steady and simple structure.

Preferably, a foldable cross piece is connected between the upper end of the first push rod and the upper end of the second push rod, to provide a high rigidity for the frame in the unfolded position. However, it makes without the cross piece as long as the component rods of the frame in an appropriate arrangement and with a high rigidity.

Preferably, the cross piece comprises a third rod and a fourth rod rotatablely connected with each other, wherein, the outer end of the third rod is rotatablely connected to the upper end of the first push rod, and the outer end of the fourth rod is rotatablely connected to the upper end of the second push rod, while the inner ends of the third rod and the fourth rod are rotatablely connected with each other.

Preferably, the front end of the first rear wheel bracket is rotatablely connected to one lateral end of the front connector through a third rotary shaft, and the front end of the second rear wheel bracket is rotatablely connected to the other lateral end of the front connector through a fourth rotary shaft. The axial line of the third rotary shaft is parallel to that of the fourth rotary shaft, preferably, both along the longitudinal direction. In this case, the rear wheel brackets simply need to draw towards each other along the horizontal direction during the folding process.

Preferably, the first front supporting frame has a first inclined surface, and the second front supporting frame has a second inclined surface, accordingly the front connector has a third inclined surface and a fourth inclined surface on either end, wherein, the first inclined surface meets the third inclined surface, and the first rotary shaft through which the first front supporting frame is rotatablely connected to the front connector is vertical to the first inclined surface and the third inclined surface, and the second inclined surface meets the fourth inclined surface, and the second rotary shaft through which the second front supporting frame is rotatablely connected to the front connector is vertical to the second inclined surface and the fourth inclined surface. The lower portion of the frame presents a high rigidity in the unfolded position under the corresponding inclined surfaces meeting and supporting which also induces the first front supporting frame and the second front supporting frame drawing towards each other and drawing towards the first rear wheel brackets and the second rear wheel brackets at the same time.

The present invention has the advantages that, the front ends of the rear wheel bracket are connected to the front connector directly, thus omitting the rear wheel bracket connecting piece of the prior art connected between the rear wheel brackets and the front connector, decreasing the components to provide frame with a simple structure, a simplified fabrication procedure, and a low producing cost.

### Brief Description Of The Drawings

The present invention will become more fully understood from the following detailed description of the preferred, but non-limiting embodiments thereof, described in connection with the accompanying drawings in which:
Figure 1 is a perspective view of the stroller of a preferred embodiment according to the present invention in an unfolded position.
Figure 2 is a side view of the stroller of a preferred embodiment according to the invention illustrated in FIG. 1.
Figure 3 is a perspective view showing the folding process of the stroller of a preferred embodiment according to the invention illustrated in FIG. 1.
Figure 4 is a side view of the stroller of a preferred embodiment according to the invention illustrated in FIG. 3.
Figure 5 is a perspective view showing the folded position of the stroller of a preferred embodiment according to the invention illustrated in FIG. 1.
Figure 6 is a side view of the stroller of a preferred embodiment according to the invention illustrated in FIG. 5.
Figure 7 is an explosive view of the stroller of a preferred embodiment according to the invention illustrated in FIG. 1.

### Detailed Description Of The Preferred Embodiments

The detailed description of the preferred embodiment according to the invention is given as below with the accompanying drawings so that the benefits and features of the present invention are understood for those skilled in the art, making a definition of the protection scope of the present invention. Throughout the drawings, like numerals will be used to identify similar features except where expressly otherwise indicated.

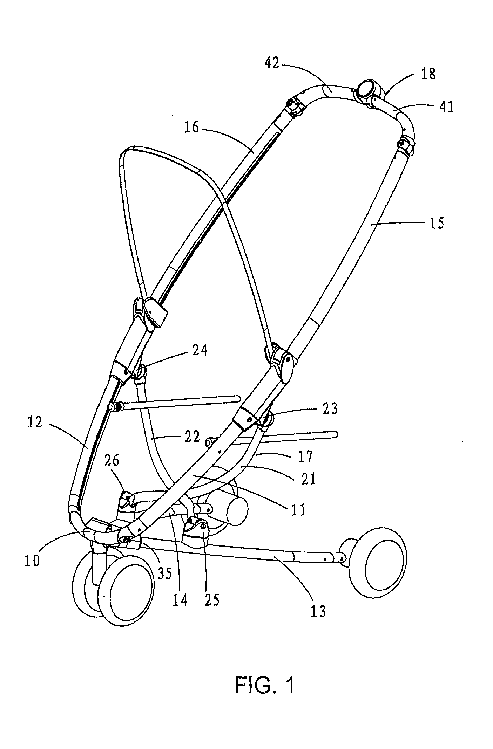

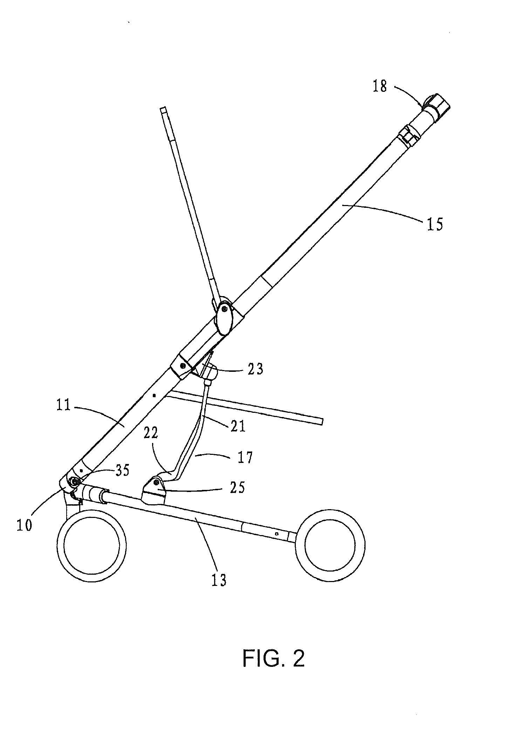

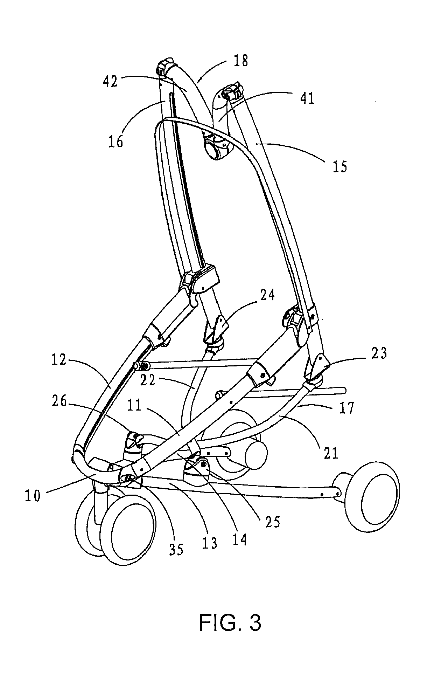

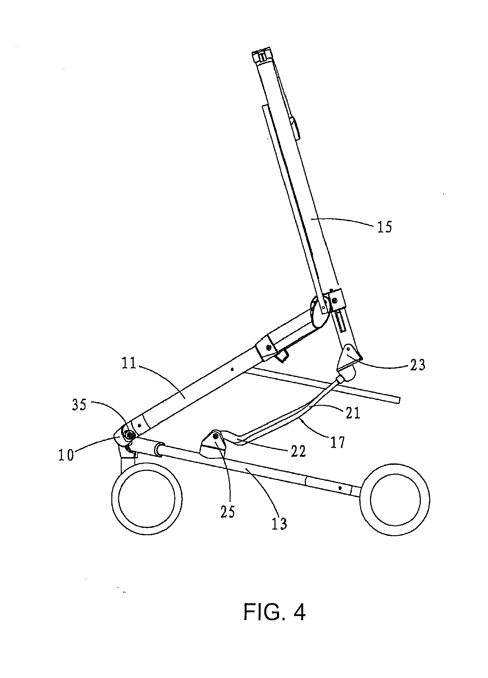

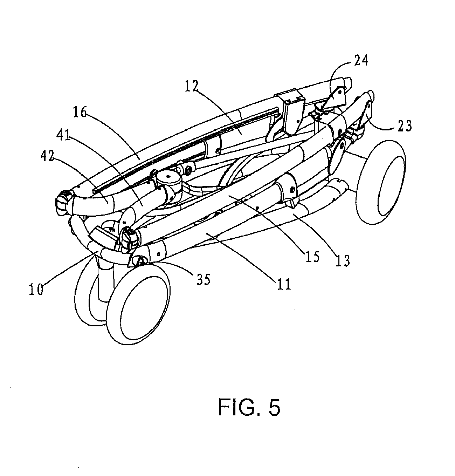

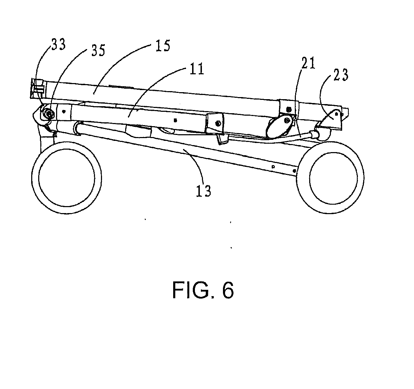

Referring to Figs. 1 to 7, a bi-directionally foldable stroller comprises a frame and wheels arranged under the frame. The frame can be unfolded as described in Figs. 1, 2, as well as folded as described in Figs. 3,4,5,6, wherein, a locking mechanism is needed for locking the frame into the unfolded position. The frame further comprises a first front supporting frame 11 , a second front supporting frame 12, a front connector 10, a first rear wheel bracket 13, a second rear wheel bracket 14, a first push rod 15, a second push rod 16, a rear supporting frame 17, and a cross piece 18.

The lower end of the first front supporting frame 11 is rotatablely connected to one lateral end of the front connector 10 through a first rotary shaft 35, which is a spatially inclined shaft. The lower end of the second front supporting frame 12 is rotatablely connected to the other lateral end of the front connector 10 through a second rotary shaft, which is also a spatially inclined shaft. The front wheel assemblies are arranged to the lower portion of the front connector 10, and the rear wheel assemblies are arranged to the back portion of the first rear wheel bracket 13 and the second rear wheel bracket 14 respectively. The front end of the first rear wheel bracket 13 is rotatablely connected to one lateral end of the front connector 10 through a third rotary shaft (not depicted), and the front end of the second rear wheel bracket 14 is rotatablely connected to the other lateral end of the front connector 10 through a fourth rotary shaft (not depicted).

The lower end of the first push rod 15 is rotatablely connected to the upper portion of the first front supporting frame 11, and the lower end of the second push rod 16 is rotatablely connected to the upper portion of the second front supporting frame 12. The cross piece 18 is connected between the upper end of the first push rod 15 and the upper end of the second push rod 16. Now referring to the embodiment as shown in FIG. 1, 3 and 7, the cross piece 18 comprises a third rod 41 and a fourth rod 42 with the inner ends thereof being rotatablely connected with each other. The outer end of the third rod 41 is rotatablely connected to the upper end of the first push rod 15, and the outer end of the fourth rod 42 is rotatablely connected to the upper end of the second push rod 16. The stroller presents a high rigidity when the frame in an unfolded position with such a cross piece 18. However, it makes without the cross piece 18 as long as the component rods of the frame in an appropriate arrangement and with a high rigidity.

As shown in Figs. 1, 2, 3, the rear supporting frame 17 is connected between the push rods and the rear wheel brackets.

As shown in Figs. 1,3,7, the rear supporting frame 17 comprises a first rod 21 and a second rod 22 that intersect and rotatablely connect with each other at the intersection joint. One end of the first rod 21 is rotatablely connected to the lower end of the first push rod 15 through a first rotational joint 23, and the other end of the first rod 21 is rotatablely connected to the second rear wheel bracket 14 through a fourth rotational joint 26. One end of the second rod 22 is rotatablely connected to the lower end of the second push rod 16 through a second rotational joint 24, and the other end of the first rod 22 is rotatablely connected to the first rear wheel bracket 13 through a third rotational joint 25.

Alternatively, the rear supporting frame 17 can be connected between the front supporting frames and the rear wheel brackets.

In this case, the rear supporting frame 17 can be provided with other structures, for instance, the first rod 21 and the second rod 22 of the present embodiment separate from the central portion respectively into four rods, the inner ends of which are rotatablely connected to a connecting base at the central portion respectively, while the outer ends of which are rotatablely connected to the first front supporting frame 11, the second front supporting frame 12, the first rear wheel bracket 13, and the second rear wheel bracket 14 respectively, wherein, a locking device for locking the relative position is disposed between the four rods and the connecting base.

The axial line of the third rotary shaft through which the first rear wheel bracket 13 connected to the front connector 10 is parallel to that of the fourth rotary shaft through which the second rear wheel bracket 14 connected the front connector 10 along the longitudinal direction.

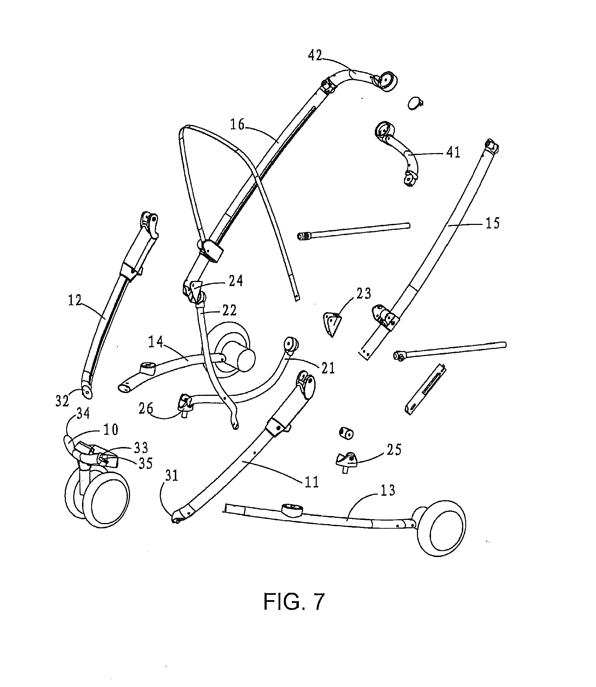

As shown in Fig. 7, it is noted that the first front supporting frame 11 has a first inclined surface 31, and the second front supporting frame 12 has a second inclined surface 32, accordingly the front connector 10 has a third inclined surface 33 and a fourth inclined surface 34 on each end, wherein, the first inclined surface 31 meets the third inclined surface 33, and the first rotary shaft 35 is vertical to the first inclined surface 31 and the third inclined surface 33; and the second inclined surface 32 meets the fourth inclined surface 34, and the second rotary shaft is vertical to the second inclined surface 32 and the fourth inclined surface 34. Owning to the guiding mechanism of the inclined surfaces and the rotary shafts, as long as the user unlocks the locking mechanism to fold the frame, the first front supporting frame 11 and the second front supporting frame 12 start proceeding a spatially combined movement constituted of a longitudinal vector and a horizonal vector, and the first push rod 15 and the second push rod 16 fold over the first front supporting frame 11 and the second front supporting frame 12 respectively; while the rear supporting frame 17 drives the first rear wheel bracket 13 and the second rear wheel bracket 14 drawing towards each other along the horizontal direction within one plane synchronously under the guiding the of the third and the fourth rotary shaft.

The orientations in the foregoing descriptions, for example "lower", "upper", "front", and "back", are defined with the frame in the fully unfolded position, wherein, the location where the front connector 10 arranged is defined as "front", while the location where the ends of the first rear wheel bracket 13 and the second rear wheel bracket 14 departing from the front connector 10 arranged is defined as "back".

The above description is meant to be exemplary only and is not limited to the example shown in the drawings and described hereinbefore, and those skilled in the art will recognize that changes may be made to the embodiment described without department from the scope of the invention disclosed. Still other modifications varied in efferent manners that fall within the scope of the present invention and their technical equivalents will be apparent to those skilled in the art, in light of a review of this disclosure, and such modifications are intended to fall within the appended claims.

## Claims

1. A bi-directionally foldable stroller, comprising a foldable frame, wheels arranged under the frame, and a locking mechanism for locking the frame into the unfolded position, wherein, the frame further comprises:
a front connector (10);
a first front supporting frame (11) and a second front supporting frame (11) on either side of the frame, the lower ends of which are rotatablely connected to the corresponding lateral end of the front connector (10) respectively;
a first rear wheel bracket (13), the front end of which is rotatablely connected to the front connector (10);
a second rear wheel bracket (14), the front end of which is rotatablely connected to the front connector (10);
a first push rod (15), the lower end of which is rotatablely connected to the upper portion of the first front supporting frame (11);
a second push rod (16), the lower end of which is rotatablely connected to the upper portion of the second front supporting frame (12);and
a rear supporting frame (17), which is connected between the push rods (15,16) and the rear wheel brackets (13,14), or, between the front supporting frames (11, 12) and the rear wheel brackets (13,14).

2. The bi-directionally foldable stroller as claimed in claim 1, the lower end of the first front supporting frame (11) being rotatablely connected to one lateral end of the front connector (10) through a first rotational piece that allows the first front supporting frame (11) to rotate downwards and draw towards the second front supporting frame (12), and the lower end of the second front supporting frame (12) being rotatablely connected to the other lateral end of the front connector (10) through a second rotational piece that allows the second front supporting frame (12) to rotate downwards and draw towards the first front supporting frame (11).

3. The bi-directionally foldable stroller as claimed in claim 1 or 2, the rear supporting frame (17) further comprising a first rod (21) and a second rod (22) that intersect and rotatablely connect with each other at the intersection joint.

4. The bi-directionally foldable stroller as claimed in claim 3, one end of the first rod (21) being rotatablely connected to the lower end of the first push rod (15) through a first rotational joint (23), while the other end of the first rod (21) being rotatablely connected to the second rear wheel bracket (14) through a fourth rotational joint (26).

5. The bi-directionally foldable stroller as claimed in claim 3, one end of the second rod (22) being rotatablely connected to the lower end of the second push rod (16) through a second rotational joint (24), while the other end of the first rod (22) being rotatablely connected to the first rear wheel bracket (13) through a third rotational joint (25).

6. The bi-directionally foldable stroller as claimed in claim 1 or 2, a foldable cross piece (18) being connected between the upper end of the first push rod (15) and the upper end of the second push rod (16).

7. The bi-directionally foldable stroller as claimed in claim 6, the cross piece (18) further comprising a third rod (41) and a fourth rod (42) with the inner ends being rotatablely connected, the outer end of the third rod (41) being rotatablely connected to the upper end of the first push rod (15), the outer end of the fourth rod (42) being rotatablely connected to the upper end of the second push rod (16).

8. The bi-directionally foldable stroller as claimed in claim 1 or 2, the front end of the first rear wheel bracket (13) being rotatablely connected to the front connector (10) through a third rotary shaft, and the front end of the second rear wheel bracket (14) being rotatablely connected to the front connector (10) through a fourth rotary shaft, wherein, the axial line of the third rotary shaft and the fourth rotary shaft is parallel to each other along the longitudinal direction.

9. The bi-directionally foldable stroller as claimed in claim 1 or 2, the first front supporting frame (11) having a first inclined surface (31), and the front connector (10) having a third inclined surface (33) that meets the first inclined surface (31), whereby, the first front supporting frame (11) is rotatablely connected to the front connector (10) through a first shaft (35) that is vertical to the first inclined surface (31) and the third inclined surface (33).

10. The bi-directionally foldable stroller as claimed in claim 1 or 2, the second front supporting frame (12) having a second inclined surface (32), and the front connector (10) having a fourth inclined surface (34) that meets the second inclined surface (32), whereby, the second front supporting frame (12) is rotatablely connected to the front connector (10) through a second shaft (32) that is vertical to the second inclined surface (32) and the fourth inclined surface (34).
